# EUROPEAN PATENT SPECIFICATION

(11) **EP 2 189 252 B1**
(45) Date of publication and mention of the grant of the patent: **15.06.2011**
(21) Application number: 09169570.0
(22) Date of filing: 07.09.2009
(51) Int. Cl.: B25J 9/00, B25J 9/04

(54) **Robotic radial tool positioning system**
Radialpositionierungssystem für Werkzeuge mittels Roboter
Système robotique de positionnement radial d'outils

(30) Priority: 21.11.2008 US 275749
(43) Date of publication of application: 26.05.2010
(73) Proprietor: Comau, Inc., Southfield, MI 48033 (US)
(72) Inventor: Graham, John, Clinton Township, MI 48038 (US); Brown, Theodore Robert, Birmingham, MI 48009 (US); Alberts, Aaron, Davidson, MI 48432 (US)
(74) Representative: Notaro, Giancarlo

(56) References cited:
- WO-A-96/08345
- JP-A- 5 109 866
- US-A- 5 083 896
- US-B2- 6 485 250

## Description

### Field of the Invention

The present invention relates to the field of robotic tool positioning assemblies and, in particular, to a robotic tool positioning assembly having two or more arms each adapted to adjust the position of a respective tool along a semi-circular path.

### Background of the Invention

In the manufacturing industry, robotic systems are used to perform a variety of tasks, including positioning workpieces, positioning tools with respect to workpieces, and assembling workpieces using tools. In such systems, accurate positioning of the tool with respect to the workpiece is critical and is thus an important design consideration. Another important design consideration is minimizing the time required to complete any single manufacturing operation. For this reason, it is known to utilize two or more robotic tools to simultaneously perform a single manufacturing operation in order to reduce the time required to complete that manufacturing operation. However, since robotic tools are often large and heavy, it is often difficult to position and support two robotic tools with respect to one another such that a single manufacturing operation may be performed using two robotic tools simultaneously. This is especially true when the robotic tools must move relative to one another with respect to two or more axes during the course of the manufacturing operation. For example, when the robotic tools must install a plurality of components along a semi-circular arc, each tool must move independent of the other in the X direction and the Y direction. Furthermore, robotic tools are often only usable over a limited range of working heights, imposing further constraints on geometric designs of robotic tool positioning systems. Accordingly, there remains a need for a robotic tool positioning system that is capable of accurately positioning two or more robotic tools with respect to a workpiece, wherein the robotic tools are moveable independent of one another.

One example of a prior device is US Patent No. 5,083,896. The device is an object handling device having first and second collapsible arm units powered by an actuator mechanism to hold and transfer objects, such as semi-conductors. The device uses respective first and second shafts to move the respective first and second arms and a third shaft for turning the first and second arm units. The first, second and third drive shafts are coaxially oriented.

### Summary of the Invention

The invention provides a robotic tool positioning system in accordance with claim 1 for positioning a first tool and a second tool. The robotic tool positioning system includes an inner shaft, a first tool arm, a first drive assembly, a tubular outer shaft, a second tool arm, and a second drive assembly.

The inner shaft that extends from an upper end to a lower end, and has a stepped profile defined by an upper portion having a first diameter and a lower portion having a second diameter that is smaller than the first diameter. A first tool arm is connected to the lower portion of the inner shaft at the lower end thereof and extends radially outward therefrom. The first tool arm has a first tool supporting surface disposed at a tool elevation for supporting the first tool thereon. The first drive assembly is configured to rotate the inner shaft about a shaft axis to selectively position the first tool along a semi-circular path.

The tubular outer shaft extends from an upper end to a lower end and has a bore formed therethrough, wherein the lower portion of the inner shaft extends through the tubular outer shaft. The second tool arm is connected to the tubular outer shaft at the lower end thereof. The second tool arm has a second tool supporting surface disposed at the tool elevation for supporting the second tool thereon. The second drive assembly is configured to rotate the tubular outer shaft about the shaft axis to selectively position the second tool along a semi-circular path.

A stepped portion may formed on the second tool arm between an inner portion of the second tool arm and the second tool supporting surface of the second tool arm, wherein an upper surface of the inner portion of the second tool arm is disposed above the tool elevation. Furthermore, a diagonal shoulder may be formed on the second tool arm, the diagonal shoulder extending inward from the stepped portion toward an inner end of the second tool arm, wherein the diagonal shoulder of the second tool arm is configured to engage a side surface of the first tool arm to restrain the first tool arm against rotating past the second tool arm.

Alternatively, a stepped portion may be formed on the first tool arm between an inner portion of the first tool arm and the first tool supporting surface of the first tool arm, wherein an upper surface of the inner portion of the first tool arm is disposed below above the tool elevation. Furthermore, a diagonal shoulder may be formed on the first tool arm, the diagonal shoulder extending inward from the stepped portion toward an inner end of the first tool arm, wherein the diagonal shoulder of the first tool arm is configured to engage a side surface of the second tool arm to restrain the second tool arm against rotating past the first tool arm.

An inner end of the second tool arm may be disposed above an inner end of the first tool arm.

The tubular outer shaft and the upper portion of the inner shaft may be equal in diameter.

The first drive assembly may have a first worm gear connected to the upper portion of the inner shaft, a first worm that meshingly engages the first worm gear to rotate the inner shaft, and a first robotic drive mechanism connected to the first worm for providing torque thereto. The second drive assembly may have a second worm gear connected to the tubular outer shaft, a second worm that meshingly engages the second worm gear to rotate the tubular outer shaft, and a second robotic drive mechanism connected to the second worm for providing torque thereto. Furthermore, the first worm gear and the second worm gear may be equal in diameter.

### Brief Description of the Drawings

Various other uses of the present invention will become more apparent by referring to the following detailed descriptions and drawings, and which:
FIG. 1 is a perspective view showing a robotic radial tool positioning system according to the present invention;
FIG. 2 is a top view showing the robotic radial tool positioning system according to the present invention;
FIG. 3 is a bottom view showing the robotic radial tool positioning system according to the present invention;
FIG. 4 is a front sectional view showing a first tool positioner and a second tool positioner of the robotic radial tool positioning system according to the present invention, wherein the first and second tool positioner are shown rotated into alignment with one another for clarity;
FIG. 5 is a top sectional view showing the first tool positioner and the second positioner of the robotic radial tool positioning system according to the present invention;
FIG. 6 is a perspective view showing a first tool arm of the first tool positioner according to the present invention;
FIG. 7 is a top perspective view of a second tool arm of the second tool positioner according to the present invention;
FIG. 8 is a bottom perspective view of the second tool arm of the second tool positioner according to the present invention; and
FIG. 9A is a top view of the first tool arm and the second tool arm disposed in an adjacent position according to the present invention; and
FIG. 9B is a top view of the first tool arm and the second tool arm disposed in a spaced position according to the present invention.

### Detailed Description of the Embodiments

Referring to the drawings, the present invention will now be described in detail with reference to the disclosed embodiments.

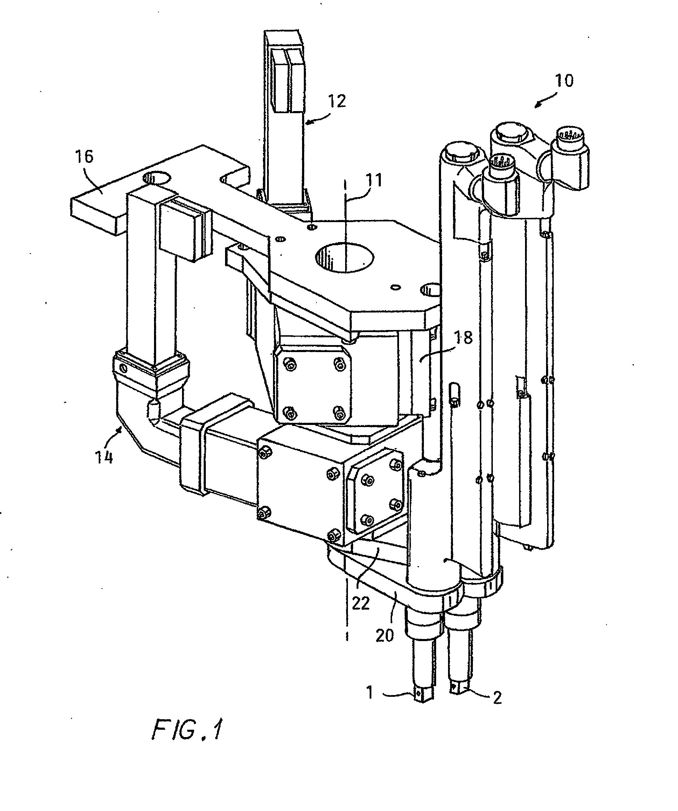

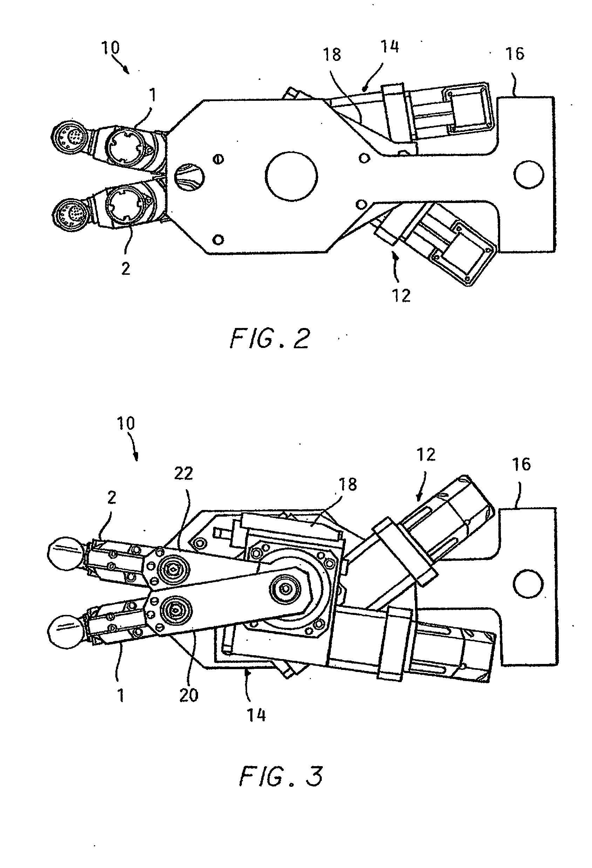

**FIGS. 1-3** show a robotic, radial tool positioning system 10 according to the present invention for selectively positioning a first tool 1 and a second tool 2 along a semi-circular arc. The first and second tools may be any type of industrial tool, such as a nut-runner. The tool positioning system 10 includes a first tool positioner 12 and a second tool positioner 14 that are connected to a carrier plate 16 by a framework 18. The carrier plate 16 is configured to support the first tool positioner 12 and the second tool positioner 14, and the tool positioning system 10 may be supported with respect to a workpiece (not shown) by a support structure, such as a robotically-positionable gantry system (not shown). The first tool positioner 12 is connected to a first tool arm 20 that supports first tool 1 for radial positioning of the first tool 1 about a shaft axis 11. The second tool positioner 14 is connected to a second tool arm 22 that supports the second tool 2 for radial positioning of the second tool 2 about the shaft axis 11. The first tool arm 20 and the second tool arm 22 support the first tool 1 and the second tool 2 at a constant radial spacing with respect to the shaft axis 11. Thus, as the first tool positioner 12 and the second tool positioner 14 rotate the first tool arm 20 and the second tool arm 22, the first tool 1 and the second tool 2 move along a semi-circular arc having its center at the shaft axis 11.

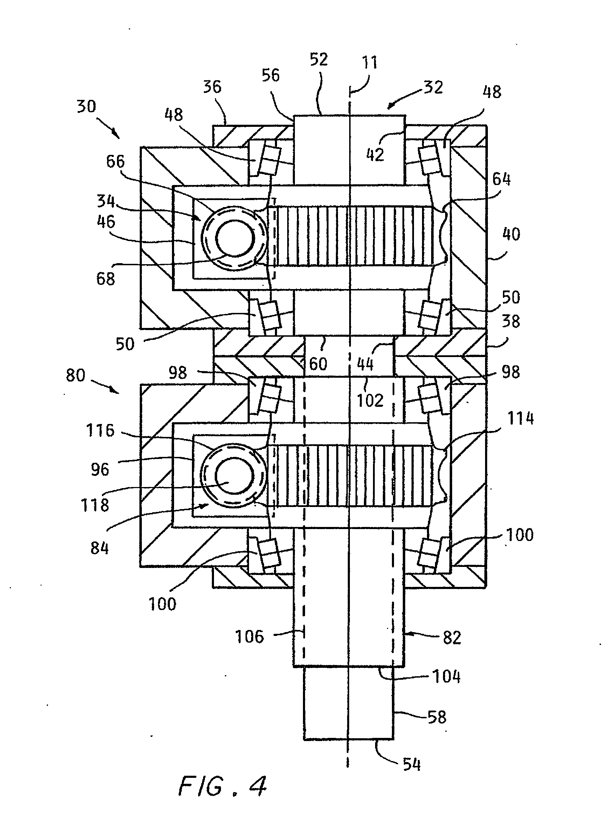

FIG. 4 is a cross-sectional view showing the first tool positioner 12 and the second tool positioner 14, wherein the first tool positioner 12 and the second tool positioner 14 are shown rotated into alignment with one another to allow for clarity of the figure. As seen in FIG. 4, the first tool positioner 12 provides radial positioning of the first tool 1 by including a first housing 30, an inner positioning shaft 32, and a first drive assembly 34. The inner positioning shaft 32 is disposed at least partially within the first housing 30. The first drive assembly 34 is operatively connected to the inner positioning shaft 32 for providing a drive torque to the inner positioning shaft 32 to cause rotation of the inner positioning shaft 32 about the shaft axis 11.

The first housing 30 includes a first or top panel 36 and a second or bottom panel 38, which are connected to the top and bottom ends, respectively, of a body 40 of the first housing 30. An upper shaft opening 42 may be formed through the top panel 36 of the first housing 30 in substantial alignment with the shaft axis 11 to allow a portion of the inner positioning shaft 32 to extend upward out of the first housing 30. Alternatively, the upper shaft opening 42 could be omitted, and the inner positioning shaft 32 could terminate within the first housing 30, below the top panel 36 of the first housing 30. A lower shaft opening 44 is formed through the bottom panel 38 of the first housing 30 to allow a portion of the inner positioning shaft 32 to extend downward out of the first housing 30.

The inner positioning shaft 32 is substantially cylindrical, and extends from a first or upper end 52 to a second or lower end 54 of the first housing 30. The inner positioning shaft 32 includes a first or upper portion 56 that meets a second or lower portion 58 at a shoulder 60 that extends substantially perpendicular to the shaft axis 11 and serves to change the diameter of the inner positioning shaft 32 and thus provide a stepped profile for the inner positioning shaft 32. In particular, the upper portion 56 of the inner positioning shaft 32 is larger in diameter than the lower portion 58 of the inner positioning shaft 32.

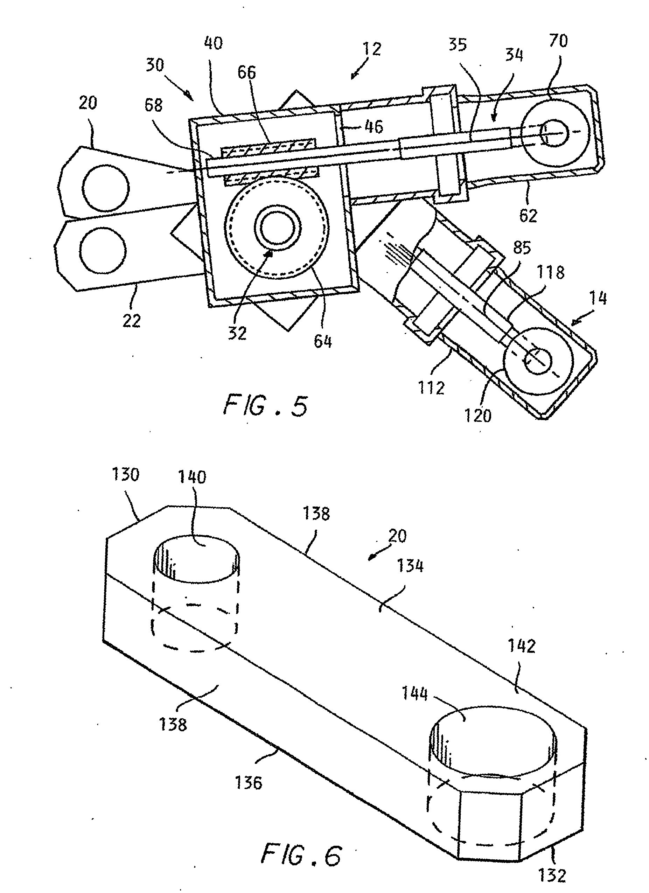

The first drive assembly 34 is operable to provide a drive torque to the inner positioning shaft 32 of the first tool positioner 12. The first drive assembly 34 includes a housing 62, a first worm gear 64, a first worm 66, a first drive shaft 68 and a first motor 70, as shown in FIG. 5. To connect the first drive assembly 34 to the first housing 30 and interface the first drive assembly 34 with the inner positioning shaft 32, a drive opening 46 is provided through a side wall of the body 40 of the first housing 30. The housing 62 of the first drive assembly 34 is connected to the body 40 of the first housing 30 of the first tool positioner 12 adjacent to the drive opening 46 in the body 40 of the first housing 30.

The first worm gear 64 is disposed on or fabricated integrally with the upper portion 56 of the inner positioning shaft 32. Thus, the first worm gear 64 is disposed within the first housing 30 such that the teeth of the first worm gear 64 are radially arrayed around the shaft axis 11. Accordingly, the first worm gear 64 rotates with respect to the shaft axis 11 in unison with the inner positioning shaft 32.

The first worm 66 is disposed in operable engagement with the first worm gear 64, and extends along a first drive axis 35 substantially perpendicular to the shaft axis 11. The first worm 66 includes at least one tooth that encircles the first worm 66 in a substantially helical configuration for meshing engagement with the teeth of the first worm gear 64.

In order to drive the first worm 66, the first worm 66 is disposed on the first drive shaft 68, which extends along the first drive axis 35. The first drive shaft 68 is disposed both in the first housing 30 of the first tool positioner 12, as well as in the housing 62 of the first drive assembly 34, and thus passes through the drive opening 46 in the first housing 30 of the first tool positioner 12. The first drive shaft 68 operatively connects the first worm 66 to the first motor 70 for torque transmission from the first motor 70 to the first worm 66. The first motor 70 serves as a robotic drive mechanism, and thus may be any type of robotically controllable motor, such as an electronic stepper motor, that can be computer controlled according to a predetermined or dynamically generated program, or in response to operator commands. The first motor 70 may be coupled to the first drive shaft 68 by an appropriate fitting (not shown), by a bevel gear set (not shown), a belt drive (not shown), or any other suitable conventional structure.

Turning again to FIG. 4, the second tool positioner 14 provides radial positioning of the second tool 2 by including a second housing 80, an outer positioning shaft 82, and a second drive assembly 84. The outer positioning shaft 82 is disposed at least partially within the housing 80. The second drive assembly 84 is operatively connected to the outer positioning shaft 82 for providing a drive torque to the outer positioning shaft 82 to cause rotation of the outer positioning shaft 82 about the shaft axis 11.

The second housing 80 includes a first or top panel 86 and a second or bottom panel 88, which are connected to the top and bottom ends, respectively, of a body 90. An upper shaft opening 92 may be formed through the top panel 86 in substantial alignment with the shaft axis 11 to allow a portion of the outer positioning shaft 82 to extend upward out of the second housing 80 and to allow the inner positioning shaft 32 of the first tool positioner 12 to extend into the second housing 80 and through the outer positioning shaft 82. A lower shaft opening 94 is formed through the bottom panel 88 of the second housing 80 to allow a portion of the outer positioning shaft 82 and a portion of the inner positioning shaft 32 to extend downward out of the second housing 80. In order to support the outer positioning shaft 82 within the second housing 80, an upper bearing 98 and a lower bearing 100 are provided in the second housing 80 adjacent to the top panel 86 and the bottom panel 88, respectively.

The outer positioning shaft 82 is generally cylindrical and tubular and extends from a first or upper end 102 to a second or lower end 104. The outer positioning shaft 82 has a bore 106 that is substantially cylindrical and extends axially through the outer positioning shaft 82 along the shaft axis 11 of the tool positioning system 10. The inner diameter of the bore 106 of the outer positioning shaft 82 is complementary to the outer diameter of the lower portion 58 of the inner positioning shaft 32, such that the lower portion 58 of the inner positioning shaft 32 may be disposed at least partially within the bore 106 of the outer positioning shaft 82 and extend through the outer positioning shaft 82. The maximum degree of axial insertion of the inner positioning shaft 32 into the bore 106 of the outer positioning shaft 82 is limited by engagement of the upper end 102 of the outer positioning shaft 82 with the shoulder 60 of the inner positioning shaft 32. Furthermore, the outer diameter of the outer positioning shaft 82 may be substantially equal to the outer diameter of the upper position 56 of the inner positioning shaft 32, which allows the first housing 30 and the second housing 80 to be identical in construction, since the geometric configuration of the inner positioning shaft 32 between the bearings 48, 50 of the first housing 30 is substantially identical to the geometric configuration of the outer positioning shaft 82 between the bearings 98, 100 of the second housing 80.

The second drive assembly 84 is operable to provide a drive torque to the outer positioning shaft 82 of the second tool positioner 14. The second drive assembly 84 includes a housing 112, a second worm gear 114, a second worm 116, a drive shaft 118 and a second motor 120, as shown in FIG. 5. To connect the second drive assembly 84 to the second housing 80 and interface the second drive assembly 84 with the outer positioning shaft 82, a drive opening 96 is provided through a side wall of the body 90 of the second housing 80. The housing 112 of the second drive assembly 84 is connected to the body 90 of the second housing 80 of the second tool positioner 14 adjacent to the drive opening 96 in the body 90 of the second housing 80.

The second worm gear 114 is disposed on or fabricated integrally with the outer positioning shaft 82. Thus, the second worm gear 114 is disposed within the second housing 80 such that the teeth of the second worm gear 114 are radially arrayed around the shaft axis 11. Accordingly, the second worm gear 114 rotates with respect to the shaft axis 11 in unison with the outer positioning shaft 82. The second worm gear 114 is substantially identical to the first worm gear 64, and the first and second worm gears 64, 114 are of substantially equal diameter.

The second worm 116 is disposed in operable engagement with the second worm gear 114 and extends along a second drive axis 85 that extends substantially perpendicular to the shaft axis 11. The second worm 116 includes at least one tooth that encircles the second worm 116 in a substantially helical configuration for meshing engagement with the teeth of the second worm gear 114. The second worm 116 is substantially identical to the first worm 66, and the first and second worms 66, 116 are of substantially equal diameter.

In order to drive the second worm 116, the second worm 116 is disposed on the second drive shaft 118, which extends along the second drive axis 85. The second drive shaft 118 is disposed both in the second housing 80 of the second tool positioner 14, as well as in the housing 112 of the second drive assembly 84 and thus passes through the drive opening 96 in the second housing 80 of the second tool positioner 14. The second drive shaft 118 operatively connects the second worm 116 to the second motor 120 for torque transmission from the second motor 120 to the second worm 116. The second motor 120 serves as a robotic drive mechanism and thus may be any type of robotically controllable motor, such as an electronic stepper motor, that can be computer controlled according to a predetermined or dynamically generated program, or in response to operator commands. The second motor 120 may be coupled to the second drive shaft 118 by an appropriate fitting (not shown), by a bevel gear set (not shown), a belt drive (not shown), or any other suitable conventional structure.

As shown in FIG. 6, the first tool arm 20 is a rigid, elongate member that extends from an inner end 130 to an outer end 132. The first tool arm 20 has a generally rectangular configuration, including a top surface 134, a bottom surface 136, and side surfaces 138. The inner end 130 of the first tool arm 20 is configured to be connected to the inner positioning shaft 32 of the first tool positioner 12 such that the first tool arm 20 extends substantially perpendicular to the inner positioning shaft 32 of the first tool positioner 12. In particular, a mounting aperture 140 extends through the first tool arm 20, from the top surface 134 of the first tool arm 20 to the bottom surface 136 of the first tool arm 20, at the inner end 130 thereof. Thus, the first tool arm 20 may be seated over the lower end 54 of the inner positioning shaft 32. The first tool arm 20 is rigidly connected to the lower end 54 of the inner positioning shaft 32 of the first tool positioner 12 by any suitable fastening structure. Accordingly, rotation of the inner positioning shaft 32 in response to the drive torque provided by the first drive assembly 34 causes rotation of the first tool arm 20 around the shaft axis11.

The outer end 132 of the first tool arm 20 includes a first tool supporting surface 142 that is configured to support the first tool 1. The first tool supporting surface 142 may be at substantially the same elevation as and substantially coincident with the top surface 134 of the first tool arm 20. For example, the first tool supporting surface 142 of the first tool arm 20 may include a first tool aperture 144 that extends through the first tool arm 20 from the tool supporting surface 142 of the first tool arm 20 to the bottom surface 136 of the first tool arm 20. The first tool aperture 144 is configured to supportably receive the first tool 1 at a predetermined elevation, and the first tool 1 may be fixed in position with respect to the first tool arm 20 by a friction fit, or by any suitable fasteners. However, it should be understood that the first tool aperture 144 is not necessary, in that other structures could be provided to support the first tool 1 at a predetermined elevation.

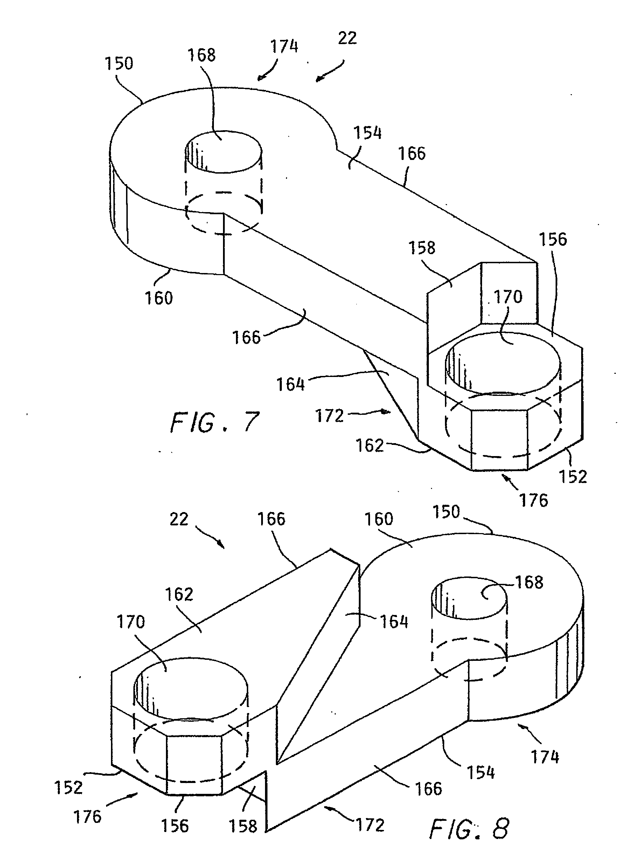

As shown in FIGS. 7-8, the second tool arm 22 is a rigid, elongate member that extends from an inner end 150 to an outer end 152. The second tool arm 22 has a generally rectangular stepped configuration, including a top surface 154, a second tool supporting surface 156 that is separated from the top surface 154 by a shoulder 158, an inner bottom surface 160 that is separated from an outer bottom surface 162 by a diagonal shoulder 164, and side surfaces 166.

The inner end 150 of the second tool arm 22 is configured to be connected to the outer positioning shaft 82 of the second tool positioner 14 such that the second tool arm 22 extends substantially perpendicular to the outer positioning shaft 82 of the second tool positioner 14. In particular, a mounting aperture 168 extends through the second tool arm 22, from the top surface 154 of the second tool arm 22 to the inner bottom surface 160 of the second tool arm 22, at the inner end 150 thereof. Thus, the second tool arm 22 may be seated over the lower end 104 of the outer positioning shaft 82. The second tool arm 22 is rigidly connected to the lower end 104 of the outer positioning shaft 82 of the second tool positioner 14 by any suitable fastening structure. Accordingly, rotation of the outer positioning shaft 82 in response to the drive torque provided by the first drive assembly 34 causes rotation of the second tool arm 22 around the shaft axis 11.

The second tool supporting surface 156 is disposed at the outer end 152 of the second tool arm 22 and is configured to support the second tool 2. For example, the second tool supporting surface 156 of the second tool arm 22 may include a second tool aperture 170 that extends through the second tool arm 22 from the tool supporting surface 156 of the second tool arm 22 to the outer bottom surface 162 of the second tool arm 22. The second tool aperture 170 is configured to supportably receive the second tool 2 at a predetermined elevation, and the second tool 2 may be fixed in position with respect to the second tool arm 22 by a friction fit, or by any suitable fasteners.

The second tool arm includes a stepped portion 172, which is defined between the shoulder 158 and the diagonal shoulder 164. An inner portion 174 of the second tool arm 22 is defined between the inner end 150 of the second tool arm 22 and the diagonal shoulder 164, and has a substantially continuous elevation. The diagonal shoulder 164 begins outward of the mounting aperture 168 and extends at an angle, such as 30 degrees, with respect to the side surfaces 166 of the second tool arm. Thus, the width of the stepped portion 172 widens as the diagonal shoulder 164 progresses toward the outer end 152 of the second tool arm 22. An outer portion 176 of the second tool arm 22 is defined between the outer end 152 of the second tool arm 22 and the shoulder 158, and has a substantially continuous elevation. The shoulder 158 extends between the side surfaces 166 of the second tool arm 22 and may have a shape that is straight, arcuate, segmented or any combination thereof. The shoulder 158 may extend substantially perpendicular to the side surfaces 166 of the second tool arm, or at an angle thereto.

The elevation of the second tool arm 22 drops between the inner end 152 of the second tool arm 22 and the outer end 150 of the second tool arm 22 at the stepped portion 172. The elevation of the second tool supporting surface 156 of the second tool arm 22, which is located in the outer portion 176 of the second tool arm 22, is substantially the same as or slightly lower than the elevation of the inner bottom surface 160 of the second tool arm 22, which is located in the inner portion 174 of the second tool arm 22. Additionally, the depth of the inner portion 174 of the second tool arm 22 and the depth of the outer portion 176 of the second tool arm 22 may be substantially equal.

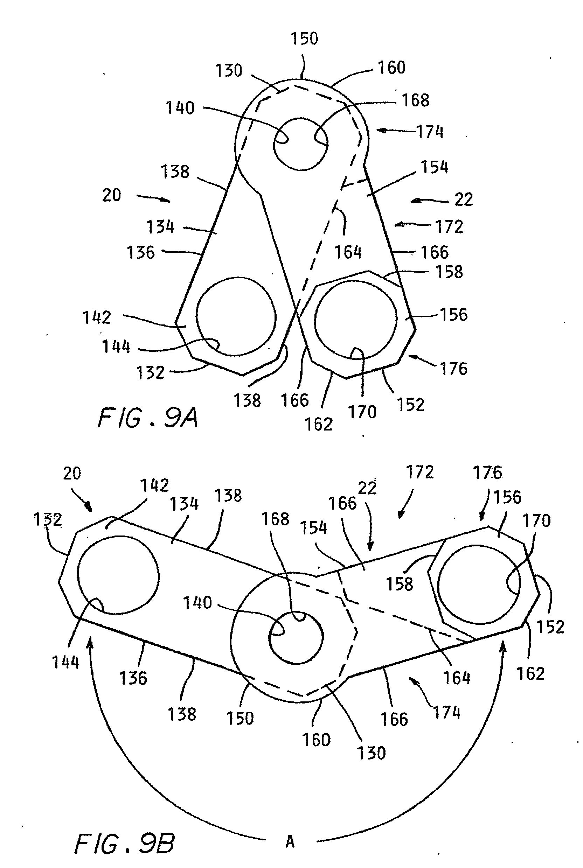

As shown in FIGS. 9A - 9B, the first tool arm 20 and the second tool arm 22 move along a semi-circular path A between an adjacent position (FIG. 9A) and spaced positions (FIG. 9B). During movement of the first tool arm 20 and the second tool arm 22, the first tool supporting surface 142 of the first tool arm 20 and the second tool supporting surface 156 of the second tool arm 22 remain at a common tool elevation to support the first tool 1 and the second tool 2 at the tool elevation throughout movement of first tool arm 20 and the second tool arm 22. In a case where the first and second tools 1, 2 have a limited range of effective working heights, supporting the first and second tools 1, 2 at a common tool elevation allows maximum utilization of working range of both of the first and second tools 1, 2.

The adjacent position is established when the first tool arm 20 is at a minimum angular spacing from the second tool arm 22. However, the adjacent position may be established at any angular orientation of the first and second tool arms 20, 22 with respect to the carrier plate 16 or other fixed portion of the tool positioning system 10. In the adjacent position, the first tool arm 20 and the second tool arm 22 are in a nested configuration, wherein a portion of the top surface 134 of the first tool arm 20 is directly adjacent to and facing the inner bottom surface 160 of the second tool arm 22, and further wherein one of the side surfaces 138 of the first tool arm 20 is adjacent to and facing the diagonal shoulder 164 of the second tool arm 22. Additionally engagement of one of the side surfaces 138 of the first tool arm 20 with the diagonal shoulder 164 of the second tool arm 22 prevents further movement of the first tool 1 toward the second tool 2, thus preventing a collision of the first and second tools 1, 2.

The spaced position is established when the first tool arm 20 is disposed at any angular spacing with respect to the second tool arm 22 that is substantially greater that the minimum angular spacing as dictated by engagement of one of the side surfaces 138 of the first tool arm 20 with the diagonal shoulder 164 of the second tool arm 22.

In use, an operator may either manually or programmatically utilize the tool positioning system 10 to selectively position the first tool 1 and the second tool 2 along a semi-circular arc. To selectively position the first tool 1, the operator actuates the first drive assembly 34 of the first tool positioner 12 to apply a drive torque to the inner positioning shaft 32, which causes rotation of the inner positioning shaft 32, the first tool arm 20, and the first tool 1. To selectively position the second tool 2, the operator actuates the second drive assembly 84 of the second tool positioner 14 to apply a drive torque to the outer positioning shaft 82, which causes rotation of the outer positioning shaft 82, the second tool arm 22, and the second tool 2.

## Claims

1. A robotic tool positioning system (10) for positioning a first tool (1) and a second tool (2), comprising:
an inner shaft (32) that extends from an upper end (52) to a lower end (54), the inner shaft (32) having a stepped profile defined by an upper portion (56) having a first diameter and a lower portion (58) having a second diameter that is smaller than the first diameter;
a first tool arm (20) connected to the lower portion (58) of the inner shaft (32) at the lower end (54) thereof and extending radially outward therefrom, the first tool arm (20) having a first tool supporting surface (142) disposed at a tool elevation for supporting the first tool (1) thereon;
a first drive assembly (34) configured to rotate the inner shaft (32) about a shaft axis (11) to selectively position the first tool (1) along a semi-circular path (A);
a tubular outer shaft (82) that extends from an upper end (102) to a lower end (104), the tubular outer shaft having a bore (106) formed therethrough, wherein the lower portion (58) of the inner shaft (32) extends through the tubular outer shaft (82);
a second tool arm (22) connected to the tubular outer shaft (82) at the lower end (104) thereof, the second tool arm (22) having a second tool supporting surface (156) disposed at the tool elevation for supporting the second tool (2) thereon; and
a second drive assembly (84) configured to rotate the tubular outer shaft (82) about the shaft axis (11) to selectively position the second tool (2) along a semi-circular path (A).

2. The robotic tool positioning system of claim 1, further comprising:
a stepped portion (172) formed on the second tool arm (22) between an inner portion (174) of the second tool arm and the second tool supporting surface (156) of the second tool arm (22), wherein an upper surface of the inner portion (174) of the second tool arm is disposed above the tool elevation.

3. The robotic tool positioning system of claim 2, further comprising:
a diagonal shoulder (164) formed on the second tool arm (22), the diagonal shoulder (164) extending inward from the stepped portion (172) toward an inner end (150) of the second tool arm (22), wherein the diagonal shoulder (164) of the second tool arm (22) is configured to engage a side surface (138) of the first tool arm to restrain the first tool arm (20) against rotating past the second tool arm (22).

4. The robotic tool positioning system of claim 1, further comprising:
a stepped portion formed on the first tool arm (20) between an inner portion of the first tool arm and the first tool supporting surface (142) of the first tool arm, wherein an upper surface of the inner portion of the first tool arm is disposed below the tool elevation.

5. The robotic tool positioning system of claim 4, further comprising:
a diagonal shoulder formed on the first tool arm (20), the diagonal shoulder extending inward from the stepped portion toward an inner end (130) of the first tool arm, wherein the diagonal shoulder of the first tool arm is configured to engage a side surface (166) of the second tool arm to restrain the second tool arm (22) against rotating past the first tool arm (20).

6. The robotic tool positioning system of claim 1, wherein an inner end (150) of the second tool arm (22) is disposed above an inner end (130) of the first tool arm (20).

7. The robotic tool positioning system of claim 1, wherein the tubular outer shaft (82) and the upper portion (56) of the inner shaft (32) are equal in diameter.

8. The robotic tool positioning system of claim 1, further comprising:
the first drive assembly (34) having a first worm gear (64) connected to the upper portion (56) of the inner shaft (32), a first worm (66) that meshingly engages the first worm gear (64) to rotate the inner shaft, and a first robotic drive mechanism (70) connected to the first worm (66) for providing torque thereto; and
the second drive assembly (84) having a second worm gear (114) connected to the tubular outer shaft (82), a second worm (116) that meshingly engages the second worm gear (114) to rotate the tubular outer shaft (82), and a second robotic drive mechanism (120) connected to the second worm (116) for providing torque thereto.

9. The robotic tool positioning system of claim 8, wherein the first worm gear (64) and the second worm gear (114) are equal in diameter.

10. The robotic tool positioning system of claim 8, further comprising:
a stepped portion (172) formed on the second tool arm (22) between an inner portion (174) of the second tool arm and the second tool supporting surface (156) of the second tool arm, wherein an upper surface of the inner portion of the second tool arm is disposed above the tool elevation.

11. The robotic tool positioning system of claim 10, further comprising:
a diagonal shoulder (164) formed on the second tool arm (22), the diagonal shoulder (164) extending inward from the stepped portion (172) toward an inner end (150) of the second tool arm, wherein the diagonal shoulder (164) of the second tool arm is configured to engage a side surface (138) of the first tool arm (20) to restrain the first tool arm (20) against rotating past the second tool arm (22).

12. The robotic tool positioning system of claim 8, further comprising:
a stepped portion formed on the first tool arm (20) between an inner portion of the first tool arm and the first tool supporting surface (142) of the first tool arm (20), wherein an upper surface of the inner portion of the first tool arm is disposed below above the tool elevation.

13. The robotic tool positioning system of claim 12, further comprising:
a diagonal shoulder formed on the first tool arm (20), the diagonal shoulder extending inward from the stepped portion toward an inner end (130) of the first tool arm (20), wherein the diagonal shoulder of the first tool arm is configured to engage a side surface (166) of the second tool arm (22) to restrain the second tool arm (22) against rotating past the first tool arm (20).

14. The robotic tool positioning system of claim 8, wherein an inner end (150) of the second tool arm (22) is disposed above an inner end of the first tool arm.

15. The robotic tool positioning system of claim 8, wherein the tubular outer shaft (82) and the upper portion of the inner shaft (56) are equal in diameter.

16. The robotic tool positioning system of claim 1 further comprising:
an upper housing (30) having a shaft opening (44) on a bottom surface thereof and a drive opening (46) on a side surface (40) thereof;
the upper portion (56) of the inner shaft (32) having a first worm gear (64) connected thereon, wherein the worm gear is disposed within the upper housing (30), the inner shaft (32) is rotatably supported with respect to the upper housing by a pair of bearings (48, 50), and the inner shaft extends out of the upper housing through the shaft opening (44) of the upper housing;
a first worm (66) that meshingly engages the first worm gear (64) to rotate the inner shaft (32);
a first robotic drive mechanism (70) disposed within a first drive housing (62) that is connected to the drive opening (46) of the upper housing, the first robotic drive mechanism (70) connected to the first worm (66) for providing torque thereto to selectively position the first tool (1) along the semi-circular path;
a lower housing (80) having an upper shaft opening (92) on a top surface (86) thereof and a lower shaft opening (94) on a bottom surface thereof and a drive opening (96) on a side surface (90) thereof, wherein the inner shaft (32) extends through into the lower housing (80) through the upper shaft opening (92) thereof and extends out of the lower housing through the lower shaft opening (94) thereof;
the tubular outer shaft (82) having a second worm gear (114) connected thereon, the second worm gear (114) is disposed within the lower housing (80), the tubular outer shaft (82) is rotatably supported with respect to the lower housing (80) by a pair of bearings (98, 100), and the tubular outer shaft (82) extends out of the lower housing (80) through the lower shaft opening (94) thereof;
a second worm (116) that meshingly engages the second worm gear (114) to rotate the tubular outer shaft (82); and
the second robotic drive mechanism (120) disposed within a second drive housing (112) that is connected to the drive opening (96) of the lower housing (80), the second robotic drive mechanism (120) connected to the second worm (116) for providing torque thereto to selectively position the second tool (2) along the semi-circular path.

17. The robotic tool positioning system of claim 16, wherein the tubular outer shaft (82) and the upper portion of the inner shaft (56) are equal in diameter.

18. The robotic tool positioning system of claim 16, wherein the first worm gear (64) and the second worm gear (114) are equal in diameter.

## Patentansprüche

1. System (10) zum Positionieren eines Roboter-Werkzeugs, mit dem ein erstes Werkzeug (1) und ein zweites Werkzeug (2) positioniert werden, wobei es umfasst:
eine innere Welle (32), die sich von einem oberen Ende (52) zu einem unteren Ende (54) erstreckt, wobei die innere Welle (32) ein abgestuftes Profil aufweist, das durch einen oberen Abschnitt (56), der einen ersten Durchmesser hat, und einen unteren Abschnitt (58) gebildet wird, der einen zweiten Durchmesser hat, der kleiner ist als der erste Durchmesser;
einen ersten Werkzeugarm (20), der mit dem unteren Abschnitt (58) der inneren Welle (32) am unteren Ende (54) derselben verbunden ist und sich davon radial nach außen erstreckt, wobei der erste Werkzeugarm (20) eine erste Werkzeug-Tragefläche (142) hat, die an einer Werkzeug-Höhe angeordnet ist, um das erste Werkzeug (1) zu tragen;
eine erste Antriebsanordnung (34), die so eingerichtet ist, dass sie die innere Welle (32) um eine Wellenachse (11) herum dreht, um das erste Werkzeug (1) selektiv auf einem halbkreisförmigen Weg (A) zu positionieren;
eine röhrenförmige äußere Welle (82), die sich von einem oberen Ende (102) zu einem unteren Ende (104) erstreckt, wobei durch die röhrenförmige äußere Welle hindurch eine Bohrung (106) ausgebildet ist und sich der untere Abschnitt (58) der inneren Welle (32) durch die röhrenförmige äußere Welle (82) hindurch erstreckt;
einen zweiten Werkzeugarm (22), der mit der röhrenförmigen äußeren Welle (82) am unteren Ende (104) derselben verbunden ist, wobei der zweite Werkzeugarm (22) eine zweite Werkzeug-Tragefläche (156) hat, die an der Werkzeug-Höhe angeordnet ist, um das zweite Werkzeug (2) zu tragen; und
eine zweite Antriebsanordnung (84), die so eingerichtet ist, dass sie die röhrenförmige äußere Welle (82) um die Wellenachse (11) herum dreht, um das zweite Werkzeug (2) selektiv auf einem halbkreisförmigen Weg (A) zu positionieren.

2. System zum Positionieren eines Roboterwerkzeugs nach Anspruch 1, das des Weiteren umfasst:
einen abgestuften Abschnitt (172), der an dem zweiten Werkzeugarm (22) zwischen einem inneren Abschnitt (174) des zweiten Werkzeugarms und der zweiten Werkzeug-Tragefläche (156) des zweiten Werkzeugarms (22) ausgebildet ist, wobei eine obere Fläche des inneren Abschnitts (174) des zweiten Werkzeugarms oberhalb der Werkzeug-Höhe angeordnet ist.

3. System zum Positionieren eines Roboterwerkzeugs nach Anspruch 2, das des Weiteren umfasst:
einen diagonalen Absatz (164), der an dem zweiten Werkzeugarm (22) ausgebildet ist, wobei sich der diagonale Absatz (164) von dem abgestuften Abschnitt (172) auf ein inneres Ende (150) des zweiten Werkzeugarms (22) zu nach innen erstreckt und der diagonale Absatz (164) des zweiten Werkzeugarms (22) so eingerichtet ist, dass er mit einer Seitenfläche (138) des ersten Werkzeugarms in Eingriff kommt, um den ersten Werkzeugarm (20) an Drehung an dem zweiten Werkzeugarm (22) vorbei zu hindern.

4. System zum Positionieren eines Roboterwerkzeugs nach Anspruch 1, das des Weiteren umfasst:
einen abgestuften Abschnitt, der an dem ersten Werkzeugarm (20) zwischen einem inneren Abschnitt des ersten Werkzeugarms und der ersten Werkzeug-Tragefläche (142) des ersten Werkzeugarms ausgebildet ist, wobei eine obere Fläche des inneren Abschnitts des ersten Werkzeugarms unterhalb der Werkzeug-Höhe angeordnet ist.

5. System zum Positionieren eines Roboterwerkzeugs nach Anspruch 4, das des Weiteren umfasst:
einen diagonalen Absatz, der an dem ersten Werkzeugarm (20) ausgebildet ist, wobei sich der diagonale Absatz von dem abgestuften Abschnitt auf ein inneres Ende (130) des ersten Werkzeugarms zu nach innen erstreckt und der diagonale Absatz des ersten Werkzeugarms so eingerichtet ist, dass er mit einer Seitenfläche (166) des zweiten Werkzeugarms in Eingriff kommt, um den zweiten Werkzeugarm (22) an Drehung an dem ersten Werkzeugarm (20) vorbei zu hindern.

6. System zum Positionieren eines Roboterwerkzeugs nach Anspruch 1, wobei ein inneres Ende (150) des zweiten Werkzeugarms (22) oberhalb eines inneren Endes (130) des ersten Werkzeugarms (20) angeordnet ist.

7. System zum Positionieren eines Roboterwerkzeugs nach Anspruch 1, wobei die röhrenförmige äußere Welle (82) und der obere Abschnitt (56) der inneren Welle (32) den gleichen Durchmesser haben.

8. System zum Positionieren eines Roboterwerkzeugs nach Anspruch 1, das des Weiteren umfasst, dass:
die erste Antriebsanordnung (34) ein erstes Schneckenrad (64), das mit dem oberen Abschnitt (56) der inneren Welle (32) verbunden ist, eine erste Schnecke (66), die kämmend in Eingriff mit dem ersten Schneckenrad (64) ist, um die innere Welle zu drehen, und einen ersten Roboter-Antriebsmechanismus (70) hat, der mit der ersten Schnecke (66) verbunden ist, um Drehmoment darauf auszuüben; und
die zweite Antriebsanordnung (84) ein zweites Schneckenrad (114), das mit der röhrenförmigen äußeren Welle (82) verbunden ist, eine zweite Schnecke (116), die kämmend mit dem zweiten Schneckenrad (114) in Eingriff ist, um die röhrenförmige äußere Welle (82) zu drehen, und einen zweiten Roboter-Antriebsmechanismus (120) hat, der mit der zweiten Schnecke (116) verbunden ist, um Drehmoment darauf auszuüben.

9. System zum Positionieren eines Roboterwerkzeugs nach Anspruch 8, wobei das erste Schneckenrad (64) und das zweite Schneckenrad (114) den gleichen Durchmesser haben.

10. System zum Positionieren eines Roboterwerkzeugs nach Anspruch 8, das des Weiteren umfasst:
einen abgestuften Abschnitt (172), der an dem zweiten Werkzeugarm (22) zwischen einem inneren Abschnitt (174) des zweiten Werkzeugarms und der zweiten Werkzeug-Tragefläche (156) des zweiten Werkzeugarms ausgebildet ist, wobei eine obere Fläche des inneren Abschnitts des zweiten Werkzeugarms oberhalb der Werkzeug-Höhe angeordnet ist.

11. System zum Positionieren eines Roboterwerkzeugs nach Anspruch 10, das des Weiteren umfasst:
einen diagonalen Absatz (164), der an dem zweiten Werkzeugarm (22) ausgebildet ist, wobei sich der diagonale Absatz (164) von dem abgestuften Abschnitt (172) auf ein inneres Ende (150) des zweiten Werkzeugarms zu nach innen erstreckt und der diagonale Absatz (164) des zweiten Werkzeugarms (22) so eingerichtet ist, dass er mit einer Seitenfläche (138) des ersten Werkzeugarms (20) in Eingriff kommt, um den ersten Werkzeugarm (20) an Drehung an dem zweiten Werkzeugarm (22) vorbei zu hindern.

12. System zum Positionieren eines Roboterwerkzeugs nach Anspruch 8, das des Weiteren umfasst:
einen abgestuften Abschnitt, der an dem ersten Werkzeugarm (20) zwischen einem inneren Abschnitt des ersten Werkzeugarms und der ersten Werkzeug-Tragefläche (142) des ersten Werkzeugarms (20) ausgebildet ist, wobei eine obere Fläche des inneren Abschnitts des ersten Werkzeugarms unterhalb der Werkzeug-Höhe angeordnet ist.

13. System zum Positionieren eines Roboterwerkzeugs nach Anspruch 12, das des Weiteren umfasst:
einen diagonalen Absatz, der an dem ersten Werkzeugarm (20) ausgebildet ist, wobei sich der diagonale Absatz von dem abgestuften Abschnitt auf ein inneres Ende (130) des ersten Werkzeugarms (20) zu nach innen erstreckt und der diagonale Absatz des ersten Werkzeugarms so eingerichtet ist, dass er mit einer Seitenfläche (166) des zweiten Werkzeugarms (22) in Eingriff kommt, um den zweiten Werkzeugarm (22) an Drehung an dem ersten Werkzeugarm (20) vorbei zu hindern.

14. System zum Positionieren eines Roboterwerkzeugs nach Anspruch 8, wobei ein inneres Ende (150) des zweiten Werkzeugarms (22) oberhalb eines inneren Endes (130) des ersten Werkzeugarms (20) angeordnet ist.

15. System zum Positionieren eines Roboterwerkzeugs nach Anspruch 8, wobei die röhrenförmige äußere Welle (82) und der obere Abschnitt der inneren Welle (56) den gleichen Durchmesser haben.

16. System zum Positionieren eines Roboterwerkzeugs nach Anspruch 1, das des Weiteren umfasst:
ein oberes Gehäuses (30), das eine Wellen-Öffnung (44) an einer unteren Fläche desselben und eine Antriebs-Öffnung (46) an einer seitlichen Fläche (40) desselben aufweist;
wobei der obere Abschnitt (56) der inneren Welle (32) ein erstes damit verbundenes Schneckenrad (64) hat, das Schneckenrad in dem oberen Gehäuse (30) angeordnet ist, die innere Welle (32) in Bezug auf das obere Gehäuse über ein Paar Lager (48, 50) drehbar gelagert ist und sich die innere Welle über die Wellen-Öffnung (44) des oberen Gehäuses aus dem oberen Gehäuse heraus erstreckt;
eine erste Schnecke (66), die kämmend mit dem ersten Schneckenrad (64) in Eingriff ist, um die innere Welle (32) zu drehen;
einen ersten Roboter-Antriebsmechanismus (70), der in einem ersten Antriebsgehäuse (62) angeordnet ist und mit der Antriebs-Öffnung (46) des oberen Gehäuses verbunden ist, wobei der erste Roboter-Antriebsmechanismus (70) mit der ersten Schnecke (66) verbunden ist, um Drehmoment auf diese auszuüben und das erste Werkzeug (1) selektiv auf dem halbkreisförmigen Weg zu positionieren;
ein unteres Gehäuse (80), das eine obere Wellen-Öffnung (92) an einer oberen Fläche (86) desselben und eine unter Wellen-Öffnung (94) an einer unteren Fläche desselben sowie eine Antriebs-Öffnung (96) an einer seitlichen Fläche (90) desselben aufweist, wobei sich die innere Welle (32) über die oberen Wellen-Öffnung (92) in das untere Gehäuse (80) hinein erstreckt und sich über die untere Wellenöffnung (94) aus dem unteren Gehäuse heraus erstreckt;
die röhrenförmige äußere Welle (82) ein zweites damit verbundenes Schneckenrad (114) aufweist, wobei das zweite Schneckenrad (114) in dem unteren Gehäuse (80) angeordnet ist, die röhrenförmige äußere Welle (32) in Bezug auf das untere Gehäuse (80) über ein Paar Lager (98, 100) drehbar gelagert ist und sich die röhrenförmige äußere Welle (82) über die untere Wellen-Öffnung (94) aus dem unteren Gehäuse (80) heraus erstreckt;
eine zweite Schnecke (116), die kämmend in Eingriff mit dem zweiten Schneckenrad (114) ist, um die röhrenförmige äußere Welle (82) zu drehen; und
wobei der zweite Roboter-Antriebsmechanismus (120) in einem zweiten Antriebsgehäuse (112) angeordnet ist, das mit der Antriebs-Öffnung (96) des unteren Gehäuses (80) verbunden ist, und der zweite Roboter-Antriebsmechanismus (120) mit der zweiten Schnecke (116) verbunden ist, um Drehmoment darauf auszuüben und das zweite Werkzeug (2) selektiv auf dem halbkreisförmigen Weg zu positionieren.

17. System zum Positionieren eines Roboterwerkzeugs nach Anspruch 16, wobei die röhrenförmige äußere Welle (82) und der obere Abschnitt (56) der inneren Welle (32) den gleichen Durchmesser haben.

18. System zum Positionieren eines Roboterwerkzeugs nach Anspruch 16, wobei das erste Schneckenrad (64) und das zweite Schneckenrad (114) den gleichen Durchmesser haben.

## Revendications

1. Système de positionnement d'outil robotisé (10) pour positionner un premier outil (1) et un deuxième outil (2), comprenant :
un arbre interne (32) qui s'étend à partir d'une extrémité supérieure (52) jusqu'à une extrémité inférieure (54), l'arbre interne (32) ayant un profil étagé défini par une partie supérieure (56) ayant un premier diamètre et une partie inférieure (58) ayant un deuxième diamètre qui est inférieur au premier diamètre ;
un premier bras d'outil (20) raccordé à la partie inférieure (58) de l'arbre interne (32) au niveau de sa partie inférieure (54) et s'étendant radialement vers l'extérieur à partir de cette dernière, le premier bras d'outil (20) ayant une première surface de support d'outil (142) disposée à une hauteur d'outil pour supporter le premier outil (1) sur cette dernière ;
un premier ensemble d'entraînement (34) configuré pour faire tourner l'arbre interne (32) autour d'un axe d'arbre (11) pour positionner sélectivement le premier outil (1) le long d'une trajectoire semi-circulaire (A) ;
un arbre externe tubulaire (82) qui s'étend à partir d'une extrémité supérieure (102) jusqu'à une extrémité inférieure (104), l'arbre externe tubulaire ayant un alésage (106) formé à travers ce dernier, dans lequel la partie inférieure (58) de l'arbre interne (32) s'étend à travers l'arbre externe tubulaire (82) ;
un deuxième bras d'outil (22) raccordé à l'arbre externe tubulaire (82) au niveau de son extrémité inférieure (104), le deuxième bras d'outil (22) ayant une deuxième surface de support d'outil (156) disposée à la hauteur d'outil pour supporter le deuxième outil (2) sur cette dernière ; et
un deuxième ensemble d'entraînement (84) configuré pour faire tourner l'arbre externe tubulaire (82) autour de l'axe d'arbre (11) afin de positionner sélectivement le deuxième outil (2) le long d'une trajectoire semi-circulaire (A).

2. Système de positionnement d'outil robotisé selon la revendication 1, comprenant en outre :
une partie étagée (172) formée sur le deuxième bras d'outil (22) entre une partie interne (174) du deuxième bras d'outil et la deuxième surface de support d'outil (156) du deuxième bras d'outil (22), dans lequel une surface supérieure de la partie interne (174) du deuxième bras d'outil est disposée au-dessus de la hauteur d'outil.

3. Système de positionnement d'outil robotisé selon la revendication 2, comprenant en outre :
un épaulement diagonal (164) formé sur le deuxième bras d'outil (22), l'épaulement diagonal (164) s'étendant vers l'intérieur à partir de la partie étagée (172) vers une extrémité interne (150) du deuxième bras d'outil (22), dans lequel l'épaulement diagonal (164) du deuxième bras d'outil (22) est configuré pour mettre en prise une surface latérale (138) du premier bras d'outil pour empêcher la rotation du premier bras d'outil (20) au-delà du deuxième bras d'outil (22).

4. Système de positionnement d'outil robotisé selon la revendication 1, comprenant en outre :
une partie étagée formée sur le premier bras d'outil (20) entre une partie interne du premier bras d'outil et la première surface de support d'outil (142) du premier bras d'outil, dans lequel une surface supérieure de la partie interne du premier bras d'outil est disposée au-dessous de la hauteur d'outil.

5. Système de positionnement d'outil robotisé selon la revendication 4, comprenant en outre :
un épaulement diagonal formé sur le premier bras d'outil (20), l'épaulement diagonal s'étendant vers l'intérieur à partir de la partie étagée vers une extrémité interne (130) du premier bras d'outil, dans lequel l'épaulement diagonal du premier bras d'outil est configuré pour mettre en prise une surface latérale (166) du deuxième bras d'outil pour empêcher la rotation du deuxième bras d'outil (22) au-delà du premier bras d'outil (20).

6. Système de positionnement d'outil robotisé selon la revendication 1, dans lequel une extrémité interne (150) du deuxième bras d'outil (22) est disposée au-dessus d'une extrémité interne (130) du premier bras d'outil (20).

7. Système de positionnement d'outil robotisé selon la revendication 1, dans lequel l'arbre externe tubulaire (82) et la partie supérieure (56) de l'arbre interne (32) sont identiques du point de vue du diamètre.

8. Système de positionnement d'outil robotisé selon la revendication 1, comprenant en outre :
un premier ensemble d'entraînement (34) ayant un premier engrenage à vis sans fin (64) raccordé à la partie supérieure (56) de l'arbre interne (32), une première vis sans fin (66) qui met en prise par engrènement le premier engrenage à vis sans fin (64) pour faire tourner l'arbre interne, et un premier mécanisme d'entraînement robotisé (70) raccordé à la première vis sans fin (66) pour y fournir un couple ; et
le deuxième ensemble d'entraînement (84) ayant un deuxième engrenage à vis sans fin (114) raccordé à l'arbre externe tubulaire (82), une deuxième vis sans fin (116) qui met en prise par engrènement le deuxième engrenage à vis sans fin (114) pour faire tourner l'arbre externe tubulaire (82) et un deuxième mécanisme d'entraînement robotisé (120) raccordé à la deuxième vis sans fin (116) pour y fournir un couple.

9. Système de positionnement d'outil robotisé selon la revendication 8, dans lequel le premier engrenage à vis sans fin (64) et le deuxième engrenage à vis sans fin (114) sont identiques du point de vue du diamètre.

10. Système de positionnement d'outil robotisé selon la revendication 8, comprenant en outre :
une partie étagée (172) formée sur le deuxième bras d'outil (22) entre une partie interne (174) du deuxième bras d'outil et la deuxième surface de support d'outil (156) du deuxième bras d'outil, dans lequel une surface supérieure de la partie interne du deuxième bras d'outil est disposée au-dessus de la hauteur d'outil.

11. Système de positionnement d'outil robotisé selon la revendication 10, comprenant en outre :
un épaulement diagonal (164) formé sur le deuxième bras d'outil (22), l'épaulement diagonal (164) s'étendant vers l'intérieur à partir de la partie étagée (172) vers une extrémité interne (150) du deuxième bras d'outil, dans lequel l'épaulement diagonal (164) du deuxième bras d'outil est configuré pour mettre en prise une surface latérale (138) du premier bras d'outil (20) pour empêcher la rotation du premier bras d'outil (20) au-delà du deuxième bras d'outil (22).

12. Système de positionnement d'outil robotisé selon la revendication 8, comprenant en outre :
une partie étagée formée sur le premier bras d'outil (20) entre une partie interne du premier bras d'outil et la première surface de support d'outil (142) du premier bras d'outil (20), dans lequel une surface supérieure de la partie interne du premier bras d'outil est disposée au-dessous, au-dessus de la hauteur d'outil.

13. Système de positionnement d'outil robotisé selon la revendication 12, comprenant en outre :
un épaulement diagonal formé sur le premier bras d'outil (20), l'épaulement diagonal s'étendant vers l'intérieur à partir de la partie étagée vers une extrémité interne (130) du premier bras d'outil (20), dans lequel l'épaulement diagonal du premier bras d'outil est configuré pour mettre en prise une surface latérale (166) du deuxième bras d'outil (22) pour empêcher la rotation du deuxième bras d'outil (22) au-delà du premier bras d'outil (20).

14. Système de positionnement d'outil robotisé selon la revendication 8, dans lequel une extrémité interne (150) du deuxième bras d'outil (22) est disposée au-dessus d'une extrémité interne du premier bras d'outil.

15. Système de positionnement d'outil robotisé selon la revendication 8, dans lequel l'arbre externe tubulaire (82) et la partie supérieure de l'arbre interne (56) sont identiques du point de vue du diamètre.

16. Système de positionnement d'outil robotisé selon la revendication 1, comprenant en outre :
un logement supérieur (30) ayant une ouverture d'arbre (44) sur sa surface inférieure et une ouverture d'entraînement (46) sur sa surface latérale (40) ;
la partie supérieure (56) de l'arbre interne (32) ayant un premier engrenage à vis sans fin (64) raccordé à cette dernière, dans lequel l'engrenage à vis sans fin est disposé à l'intérieur du logement supérieur (30), l'arbre interne (32) est supporté en rotation par rapport au logement supérieur par une paire de paliers (48, 50), et l'arbre interne s'étend à l'extérieur du logement supérieur en passant par l'ouverture d'arbre (44) du logement supérieur ;
une première vis sans fin (66) qui met en prise par engrènement le premier engrenage à vis sans fin (64) pour faire tourner l'arbre interne (32) ;
un premier mécanisme d'entraînement robotisé (70) disposé à l'intérieur d'un premier logement d'entraînement (62) qui est raccordé à l'ouverture d'entraînement (46) du logement supérieur, le premier mécanisme d'entraînement robotisé (70) étant raccordé à la première vis sans fin (66) pour y fournir un couple afin de positionner sélectivement le premier outil (1) le long de la trajectoire semi-circulaire ;
un logement inférieur (80) ayant une ouverture d'arbre supérieure (92) sur sa surface supérieure (86) et une ouverture d'arbre inférieure (94) sur sa surface inférieure et une ouverture d'entraînement (96) sur sa surface latérale (90), dans lequel l'arbre interne (32) s'étend dans le logement inférieur (80) par son ouverture d'arbre supérieure (92) et s'étend à l'extérieur du logement inférieur par son ouverture d'arbre inférieure (94) ;
l'arbre externe tubulaire (82) ayant un deuxième engrenage à vis sans fin (114) raccordé à ce dernier, le deuxième engrenage à vis sans fin (114) est disposé à l'intérieur du logement inférieur (80), l'arbre externe tubulaire (82) est supporté en rotation par rapport au logement inférieur (80) par une paire de paliers (98, 100), et l'arbre externe tubulaire (82) s'étend à l'extérieur du logement inférieur (80) par son ouverture d'arbre inférieure (94) ;
une deuxième vis sans fin (116) qui met en prise par engrènement le deuxième engrenage à vis sans fin (114) pour faire tourner l'arbre externe tubulaire (82) ; et
le deuxième mécanisme d'entraînement robotisé (120) disposé à l'intérieur d'un deuxième logement d'entraînement (112) qui est raccordé à l'ouverture d'entraînement (96) du logement inférieur (80), le deuxième mécanisme d'entraînement robotisé (120) étant raccordé à la deuxième vis sans fin (116) pour y fournir un couple afin de positionner sélectivement le deuxième outil (2) le long de la trajectoire semi-circulaire.

17. Système de positionnement d'outil robotisé selon la revendication 16, dans lequel l'arbre externe tubulaire (82) et la partie supérieure de l'arbre interne (56) sont identiques du point de vue du diamètre.

18. Système de positionnement d'outil robotisé selon la revendication 16, dans lequel le premier engrenage à vis sans fin (64) et le deuxième engrenage à vis sans fin (114) sont identiques du point de vue du diamètre.
